# EUROPEAN PATENT SPECIFICATION

(11) **EP 1 279 901 B1**
(45) Date of publication and mention of the grant of the patent: **23.05.2007**
(21) Application number: 02290932.9
(22) Date of filing: 12.04.2002
(51) Int. Cl.: F24F 11/00, G05D 23/19

(54) **Operation control method of air conditioner and apparatus thereof**
Verfahren zur Steuerung des Betriebs einer Klimaanlage und Vorrichtung dafür
Procédé pour la commande du fonctionnement d'un appareil de climatisation et dispositif correspondant

(30) Priority: 27.07.2001 KR 2001045516
(43) Date of publication of application: 29.01.2003
(73) Proprietor: LG ELECTRONICS INC., Seoul (KR)
(72) Inventor: Choi, Ho-Seon, Yangcheon-Gu, Seoul (KR); Lee, Gi-Seop, Gyeonggi-do, Korea (KR)
(74) Representative: Loisel, Bertrand

(56) References cited:
- US-A- 5 699 674
- PATENT ABSTRACTS OF JAPAN vol. 015, no. 081 (M-1086), 25 February 1991 (1991-02-25) & JP 02 302548 A (MITSUBISHI ELECTRIC CORP), 14 December 1990 (1990-12-14)
- PATENT ABSTRACTS OF JAPAN vol. 008, no. 210 (M-328), 26 September 1984 (1984-09-26) & JP 59 097443 A (MATSUSHITA DENKI SANGYO KK), 5 June 1984 (1984-06-05)
- PATENT ABSTRACTS OF JAPAN vol. 008, no. 166 (M-314), 2 August 1984 (1984-08-02) & JP 59 060140 A (MATSUSHITA DENKI SANGYO KK), 6 April 1984 (1984-04-06)
- PATENT ABSTRACTS OF JAPAN vol. 008, no. 160 (M-312), 25 July 1984 (1984-07-25) & JP 59 056031 A (MATSUSHITA DENKI SANGYO KK), 31 March 1984 (1984-03-31)

## Description

### BACKGROUND OF THE INVENTION

### 1. Field of the Invention

The present invention relates to an air conditioner, and in particular to an operation control method of an air conditioner and an apparatus thereof.

### 2. Description of the Related Art

Generally, an air conditioner includes a cooling function for supplying cooling air into a room after sucking and cooling hot air in the room and a heating function for supplying heating air into a room after sucking and heating cold air in the room.

Recently, an air conditioner having not only the cooling and heating functions but also a dehumidifying function has been developed and has put on the market. It will be described as below.

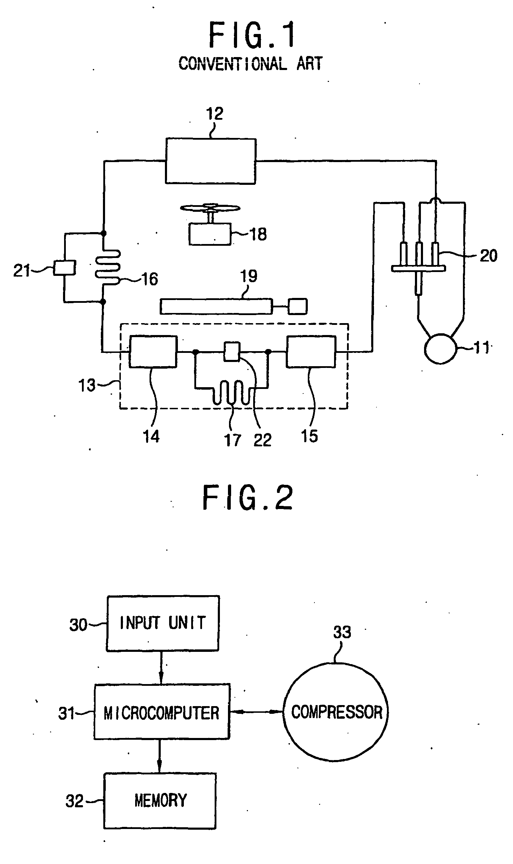

Figure 1 is a block diagram illustrating a construction of the conventional air conditioner.

As depicted in Figure 1, the conventional air conditioner includes a compressor 11 sucking low temperature-low pressure coolant vapors discharged from an internal heat exchanger 13 and compressing them in order to make high temperature-high pressure vapors, an external heat exchanger 12 emitting heat of the high temperature-high pressure vapors discharged from the compressor 11 to outside in order to vary them into high pressurized-saturated liquid, an internal heat exchanger 13 sucking a low temperature-low pressure coolant varied through an expansion unit 16 after being discharged from the external heat exchanger 12 and evaporating it in order to make saturated vapors, a four-way valve 20 for adjusting a flow of the coolant according to a heating mode or a cooling mode, and a two-way valve 21 for discharging a high pressurized coolant as it is to the external heat exchanger 13 in a constant temperature dehumidifying mode.

Herein, the internal heat exchanger 13 includes a first heat exchanger 14 sucking a coolant as a mixture of high-pressurized liquid and gas in a constant temperature dehumidification mode, emitting heat of the coolant in order to discharge high-pressurized liquid, an expansion unit 17 for varying the high-pressurized liquid from the first heat exchanger 14 into low-pressurized liquid, a second heat exchanger 15 sucking the coolant as a mixture of low-pressurized liquid and gas through the expansion unit 17, evaporating it in order to discharge low temperature-low pressure coolant, and a two-way valve 22 cutting off discharge of high-pressurized liquid from the first heat exchanger 14 to the second heat exchanger 15 in the constant temperature dehumidification mode.

The operation of the conventional air conditioner will be described as below.

First, in a heating mode operation, a high temperature-high pressure coolant compressed in the compressor 11 is varied into a low temperature-low pressure coolant while passing the four-way valve 20, the internal heat exchanger 13 and the expansion unit 16. Herein, because heat exchange of air sucked by an internal fan 19 is performed while the air passes the surface of the internal heat exchanger 13, heating air is discharged into the room, accordingly a room temperature rises. Herein, the internal heat exchanger 13 is operated as a condenser by opening a two-way valve 22 between the first heat exchanger 14 and the second heat exchanger 15.

After that, the external heat exchanger 12 sucks the low temperature-low pressure coolant, evaporates and discharges the coolant as gas, the compressor 11 sucks the coolant and compresses it in order to vary it into a high temperature-high pressure state. By repeating the above-mentioned process, the heating operation is performed.

In a cooling mode operation of the conventional air conditioner, a high temperature-high pressure coolant compressed in the compressor 11 flows into the external heat exchanger 12 through the four-way valve 20, the external heat exchanger 12 condenses it, and the coolant is varied into a low temperature-low pressure coolant while passing the expansion unit 16.

After that, the internal heat exchanger 13 sucks the low temperature-low pressure coolant, evaporates and discharges the coolant as gas, and the compressor 11 sucks the coolant discharged from the internal heat exchanger 13 and varies it into the high temperature-high pressure coolant by compressing it. Herein, the internal heat exchanger 13 is operated as an evaporator by opening the two-way valve 22 between the first heat exchanger 14 and the second heat exchanger 15. Herein, because heat exchange of air sucked by the internal fan 19 is performed while it passes the cold surface of the internal heat exchanger 13, cooling air is discharged into a room. Accordingly, a room temperature falls.

In the meantime, in a dehumidifying operation of the conventional air conditioner, a high temperature-high pressure coolant compressed by the compressor 11 flows into the external heat exchanger 12 through the four-way valve 20. Herein, because an external fan 18 is rotated at a low velocity, the high temperature-high pressure coolant from the external heat exchanger 12 passes the two-way valve 21 without being cooled almost and flows into the internal heat exchanger 13.

After that, the internal heat exchanger 13 cuts off the two-way valve 22, accordingly the first heat exchanger 14 and the second heat exchanger 15 are operated separately. In more detail, the first heat exchanger 14 discharges high-pressurized liquid by sucking cold air as a mixture of high-pressurized liquid and gas and emitting heat of it, and the second heat exchanger 15 discharges a low temperature-low pressure coolant as gas by sucking a low-pressurized liquid varied through the expansion unit 17 after being discharged from the first heat exchanger 14 and evaporating it. Herein, a humidity of air in a room sucked by the internal fan 19 is removed by being performed a heat exchange while passing through the cold surface of the second heat exchanger 15, and the dried air is heated while passing the hot surface of the first heat exchanger 14 and discharged into the room.

In the conventional air conditioner, when a user sets an expected temperature, cooling/heating air supply is performed or stopped by turning on/off the compressor 11 within a certain temperature range on the basis of the expected temperature. Accordingly, a room temperature can be maintained near the expected temperature always.

For example, if a temperature computed by adding 0.5 °C to an expected temperature is set as an ON time point of the compressor 11 and a temperature computed by subtracting 0.5 °C from the expected temperature is set as an OFF time point of the compressor 11, a room temperature is maintained only between the ON time point and the OFF time point.

However, in an early operation of the conventional air conditioner, because a cold sense of a human body is greater than a warmth sense of a human body, as time has passed a user is more sensitive to cold than heat. Accordingly, when a room temperature is controlled within a certain range on the basis of an expected temperature, a user may feel coldness than comfort after a certain time. In more detail, in a cooling operation of an air conditioner on the basis of an expected temperature, a user feels comfort in early stage, but the user may feel coldness rather than comfort as time has passed, accordingly a comfort cooling can not be performed.

Japanese patent publication JP2302548 discloses an air-conditioner where cooling-heating capacity is generated by a cooling-heating capacity generating means, the capacity is varied and a room temperature is detected by a room temperature detecting means. By changing over a high cooling-heating operation and a low cooling-heating operation by a cooling-heating capacity computing means, the room temperature is varied between a high-temperature set value being higher by about 0.5 to 1.5 degrees than a set temperature and a low-temperature set value being lower by about 0.5 to 1.5 degrees than the set temperature during a cooling or heating operation, and the capacity of the cooling-heating capacity generating means is changed by a cooling-heating capacity varying means on the basis of an output from the cooling-heating capacity computing means. An input is made by a sense input means when a user feels 'hot' or' cold' and it is stored in a storage means. The set temperature is changed by a set temperature changing means when the room temperature enters a set temperature changing zone being smaller than a room temperature variation width near the set temperature.

It is an object of the present invention to provide an operation control method of an air conditioner and an apparatus thereof which are capable of controlling an operational frequency of a compressor not less than a cold sense of a human body in a room temperature fall and controlling an operational frequency of the compressor not greater than a warmth sense of the human body in a room temperature rise.

It is another object of the present invention to provide an operation control method of an air conditioner and an apparatus thereof which are capable of preventing rapid fall or rise of a skin temperature of a human body by gradually ascending or descending a room temperature.

In order to achieve the above-mentioned objects, an operation control method of an air conditioner in accordance with the present invention includes controlling a compressor so as to adjust a room temperature not greater than a warmth sense upper limit control curve when a room temperature rises, wherein the warmth sense upper limit control curve is based on a least temperature difference that a user can feel warm for a tempareture change and controlling the compressor so as to adjust a room temperature not less than a cold sense lower limit control curve when a room temperature falls, wherein the cold sense lower limit control curve is based on a least temperature difference that a user can feel cold for a tempareture change.

In order to achieve the above-mentioned objects, an operation control apparatus of an air conditioner in accordance with the present invention includes an input unit for setting an expected temperature by a user and a microcomputer for computing a warmth sense upper limit control curve or a cold sense lower limit control curve on the basis of the set expected temperature and controlling a room temperature between an ON time point and an OFF time point of a compressor on the warmth sense upper limit control curve or the cold sense lower limit control curve, wherein the warmth sense upper limit control curve is based on a least temperature difference that a user can feel warm for a tempareture change and the cold sense lower limit control curve is based on a least temperature difference that a user can feel cold for a tempareture change.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.
In the drawings:
Figure 1 is a block diagram illustrating a construction of the conventional air conditioner;
Figure 2 is a block diagram illustrating an operation control apparatus of an air conditioner in accordance with the present invention;
Figure 3 is a waveform illustrating an operation control method of an air conditioner in performing a cooling operation in accordance with the present invention;
Figure 4 is a waveform illustrating the operation control method of the air conditioner in performing a heating operation in accordance with the present invention;
Figure 5 is a flow chart illustrating the operation control method of the air conditioner in performing the cooling operation in accordance with the present invention;
Figure 6A illustrates an average skin temperature in operation of an air conditioner in accordance with the present invention;
Figure 6B illustrates an average skin temperature in operation of an air conditioner in accordance with the conventional art; and
Figure 7 is a flow chart illustrating the operation control method of the air conditioner in performing the heating operation in accordance with the present invention.

### DETAILED DESCRIPTION OF THE PREFERRED EMBODIMENT

Figure 2 is a block diagram illustrating an operation control apparatus of an air conditioner in accordance with the present invention.

As depicted in Figure 2, an operation control apparatus of an air conditioner in accordance with the present invention includes an input unit 30 setting an expected temperature by a user, a microcomputer 31 computing a warmth sense upper limit control curve or a cold sense lower limit control curve on the basis of the set expected temperature and controlling a room temperature between an ON time point and an OFF time point of the compresser 33 on the warmth sense upper limit control curve or the cold sense lower limit control curve, and a memory 32 storing ON time point data and OFF time point data of the compressor 33.

Herein, the warmth sense upper limit control curve is computed by the microcomputer 31 on the basis of a warmth sense of a human body, and the cold sense lower limit control curve is computed by the microcomputer 31 on the basis of a warmth sense of a human body. In addition, a constant-speed compressor having only ON and OFF operations of an operational frequency or an inverter type compressor performing variable operation according to a load variation can be used as the compressor 33.

The operation of the operation control apparatus of the air conditioner in accordance with the present invention will be described as below.

In description of the present invention, explanation of a general cooling cycle and heating cycle will be abridged.

The operation control apparatus of an air conditioner in accordance with the present invention is capable of preventing a rapid variation of a skin temperature of a human body by gradually ascending or descending a room temperature on the basis of an expected temperature set by a user. For that, a room temperature is controlled so as to be not greater than a warmth sense of a human body when a room temperature rises, and a room temperature is controlled so as to be not less than a cold sense of a human body when a room temperature falls.

It will be described in more detail.

First, a user sets an expected temperature, and the microcomputer 31 computes a warmth sense upper limit control curve and a cold sense lower limit control curve.

After that, when a room temperature rises, the compressor 33 is controlled so as to adjust the room temperature not greater than the warmth sense upper limit control curve, when a room temperature falls, the compressor 33 is controlled so as to adjust the room temperature not less than the cold sense lower limit control curve. Accordingly, the air conditioner is operated between the warmth sense upper limit control curve and the cold sense lower limit control curve. Herein, in cooling operation the compressor 33 is turned on according to the warmth sense upper limit control curve and turned off according to the cold sense lower limit control curve. Herein, an OFF time point of the compressor 33 is computed by the microcomputer 31 on the basis of an ON time point of the compressor 33 and stored in the memory 32. In addition, in heating operation, the compressor 33 is turned off according to the warmth sense upper limit control curve and turned on according to the cold sense lower limit control curve.

In the early operation of the compressor 33, in cooling operation the warmth sense upper limit control curve and the cold sense lower limit control curve are ascending curves on the basis of the expected temperature, and in heating operation the warmth sense upper limit control curve and the cold sense lower limit control curve are descending curves on the basis of the expected temperature. However, after a certain time has passed, an operational frequency of the compressor 33 is controlled so as to maintain the warmth sense upper limit control curve and the cold sense lower limit control curve at a certain value. Herein, an upper limit and a lower limit on the warmth sense upper limit control curve or the cold sense lower limit control curve show an ON time point and an OFF time point of the compressor, the upper limit and the lower limit can be variously set according to an expected temperature.

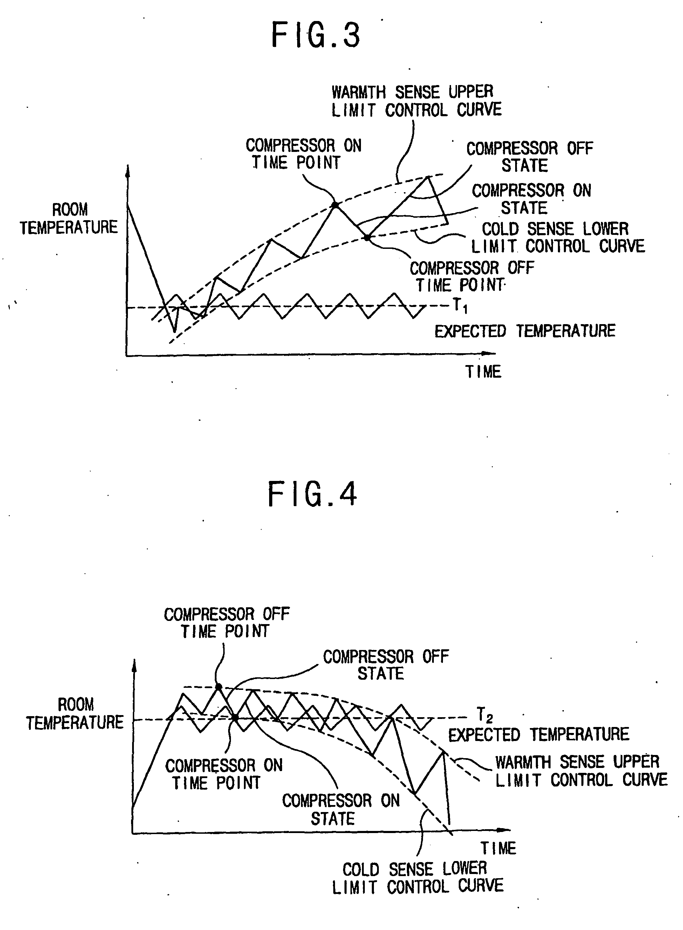

Figure 3 is a waveform illustrating an operation control method of an air conditioner in performing a cooling operation in accordance with the present invention.

As depicted in Figure 3, an ON time point of the compressor 33 gradually rises on the basis of the expected temperature, and an OFF time point of the compressor 33 is computed on the basis of the ON time point. In more detail, as time has passed, an upper limit of the warmth sense upper limit control curve rises on the basis of the expected temperature, and a lower limit of the cold sense lower limit control curve is computed on the basis of the upper limit.

Figure 4 is a waveform illustrating the operation control method of the air conditioner in performing a heating operation in accordance with the present invention.

As depicted in Figure 4, an ON time point of the compressor 33 gradually descends on the basis of the expected temperature, and an OFF time point of the compressor 33 is computed on the basis of the expected temperature. In more detail, as time has passed, the lower limit of the cold sense lower limit control curve descends on the basis of the expected temperature, and the upper limit of the cold sense lower limit control curve is computed on the basis of the expected temperature.

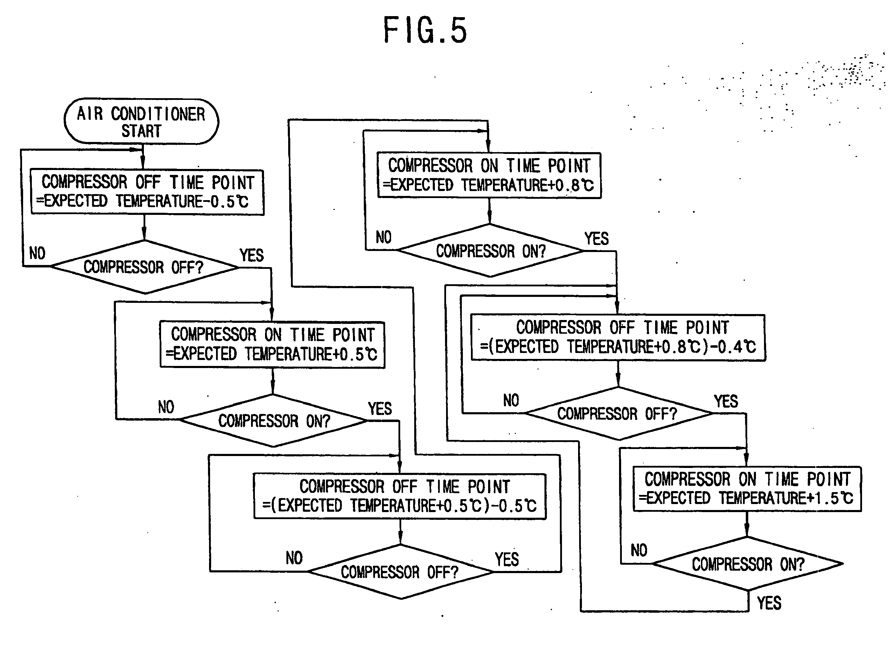

Figure 5 is a flow chart illustrating the operation control method of the air conditioner in performing a cooling operation in accordance with the present invention.

As depicted in Figure 5, in a cooling operation, when an expected temperature is set by a user, an ON time point and an OFF time point of the compressor 33 are varied according to time passage on the basis of the expected temperature. Then, the compressor 33 is turned on/off according to the ON time point and the OFF time point. Accordingly, the operation for performing or stopping cooling air supply is repeated by turning on/off the compressor 33.

It will be described in more detail. A temperature computed by subtracting 0.5 °C from an expected temperature is set as an OFF time point of the compressor 33, the compressor is operated until it reaches the OFF time point. When the compressor 33 reaches the OFF time point, a temperature computed by adding 0.5 °C to the expected temperature is set as an ON time point of the compressor 33, and the compressor 33 is stopped until it reaches the ON time point. When the compressor 33 reaches the ON time point, a temperature computed by subtracting 0.5 °C from the previous ON time point (expected temperature + 0.5 °C) of the compressor 33 is set as an OFF time point, and the compressor 33 is operated until it reaches the OFF time point. When the compressor 33 reaches the OFF time point, a temperature computed by adding 0.8 °C to the expected temperature is set as an ON time point of the compressor, and the compressor 33 is stopped until it reaches the ON time point. When the compressor 33 reaches the ON time point, a temperature computed by subtracting 0.4 °C from the previous ON time point (expected temperature + 0.8 °C) is set as an OFF time point, and the compressor 33 is operated until it reaches the OFF time point. When the compressor 33 reaches the OFF time point, a temperature computed by adding 1.5 °C to the expected temperature is set as an ON time point of the compressor 33, and the compressor is stopped until it reaches the ON time point. When the compressor 33 reaches the ON time point, an OFF time point of the compressor 33 is set, and the compressor 33 is operated until it reaches the OFF time point. Herein, when a certain time has passed, an OFF time point of the compressor 33 is fixed as a certain value, a room temperature is adjusted by controlling an operational frequency of the compressor 33 on the basis of the previous OFF time point (expected temperature + 0.8 °C - 0.4 °C) and the previous ON time point (expected temperature + 1.5 °C).

In more detail, as time has passed, an ON time point of the compressor 33 ascends on the basis of the expected temperature, and an OFF time point of the compressor 33 is computed on the basis of the ON time point of the compressor 33. In more detail, the operation of the air conditioner is controlled by ascending an upper limit of a room temperature on the basis of the expected temperature and computing a lower limit of a room temperature on the basis of the upper limit of a room temperature as time has passed.

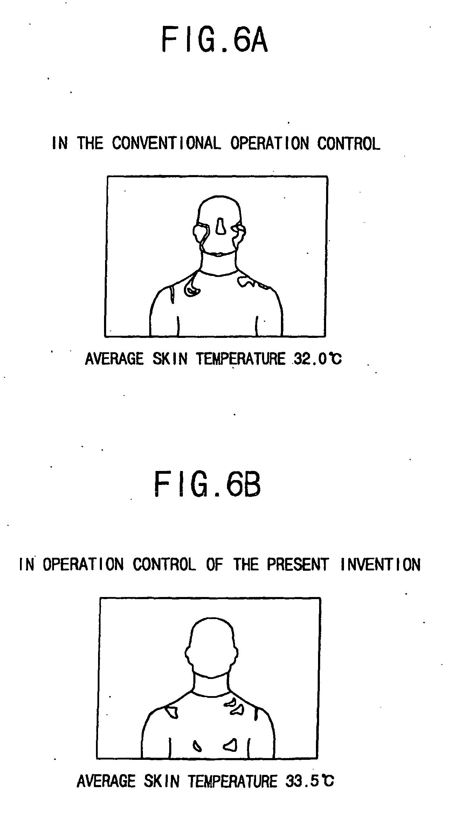

Figure 6A illustrates an average skin temperature in operation of the air conditioner in accordance with the present invention, and Figure 6B illustrates an average skin temperature in operation of the conventional air conditioner. As depicted in Figures 6A and 6B, in the conventional art, because an average skin temperature is 32 °C after operating the air conditioner for a certain time, a user may feel coldness and discomfort, however in the operation of the air conditioner in accordance with the present invention an average skin temperature is 33.5 °C, accordingly a user feels comfort.

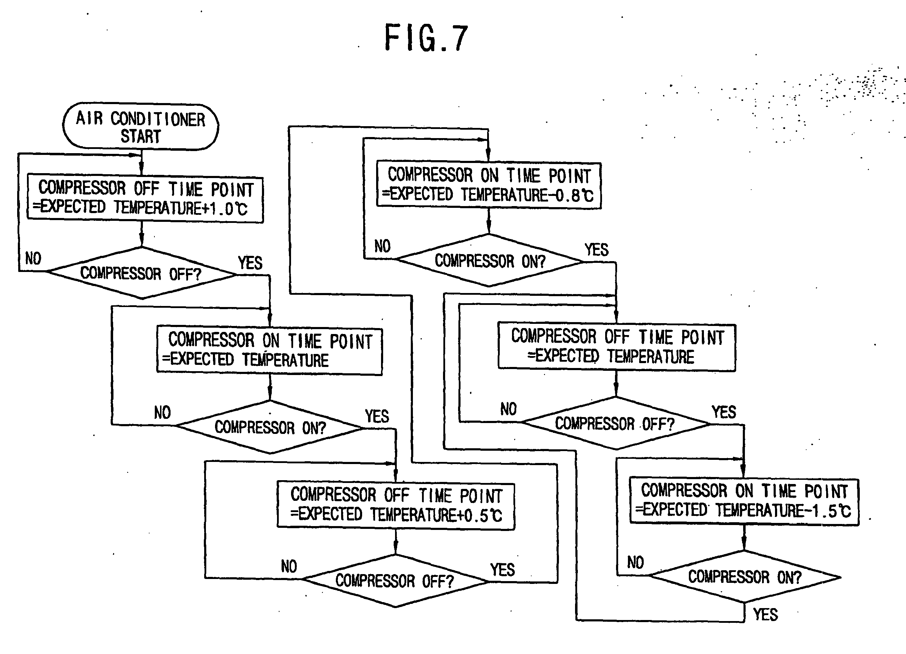

Figure 7 is a flow chart illustrating the operation control method of the air conditioner in performing a heating operation in accordance with the present invention.

As depicted in Figure 7, when an expected temperature in heating operation is set by a user, an ON time point and an OFF time point of the compressor 33 are varied according to time passage on the basis of the expected temperature. After that, performing or stopping of heating air supply is repeated by turning the compressor 33 on/off according to the ON time point and the OFF time point

It will be described in more detail. First, a temperature computed by adding 1.0 °C to an expected temperature is set as an OFF time point of the compressor 33, and the compressor 33 is operated until it reaches the OFF time point. When the compressor 33 reaches the OFF time point, the expected temperature is set as an ON time point of the compressor 33, and the compressor 33 is stopped until it reaches the ON time point. When the compressor 33 reaches the ON time point, a temperature computed by adding 0.5°C to the expected temperature is set as an OFF time point of the compressor 33, and the compressor 33 is operated until it reaches the OFF time point. When the compressor 33 reaches the OFF time point, a temperature computed by subtracting 0.8 °C from the expected temperature is set as an ON time point of the compressor 33, and the compressor 33 is stopped until it reaches the ON time point. When the compressor 33 reaches the ON time point, the expected temperature is set as an OFF time point, and the compressor 33 is operated until it reaches the OFF time point. When the compressor 33 reaches the OFF time point, a temperature computed by subtracting 1.5 °C from the expected temperature is set as an ON time point of the compressor 33, and the compressor 33 is stopped until it reaches the ON time point. When the compressor 33 reaches the ON time point, the expected temperature is set as an OFF time point, and the compressor 33 is operated until it reaches the OFF time point. Herein, after a certain time has passed, an OFF time point of the compressor is fixed as a certain value, a room temperature is adjusted by controlling an operational frequency of the compressor on the basis of the previous OFF time point (expected temperature) and the ON time point (expected temperature - 1.5 °C) of the compressor.

In more detail as time has passed, an ON time point of the compressor 33 descends on the basis of the expected temperature, an OFF time point of the compressor 33 is computed on the basis of the expected temperature. In other words, as time has passed, heating operation is controlled by descending a lower limit of a room temperature on the basis of the expected temperature and computing an upper limit of a room temperature on the basis of the expected temperature.

As described above, in order to prevent a rapid variation of a skin temperature of a human body by ascending/descending a room temperature gradually, the present invention adjusts a room temperature not less than a cold sense of a human body in a room temperature fall and adjusts a room temperature not greater than a warmth sense of a human body in a room temperature rise. Accordingly, comfort heating/cooling can be performed.

## Claims

1. An operation control method of an air conditioner for adjusting a room temperature by repeating a rise and a fall of a room temperature within a certain temperature range, the operation control method of an air conditioner comprising the steps of:
controlling a compressor (33) so as to adjust a room temperature not greater than a warmth sense upper limit control curve when a room temperature rises, wherein the warmth sense upper limit control curve is based on a least temperature difference that a user can feel warm for temperature change; and
controlling the compressor (33) so as to adjust a room temperature not less than a cold sense lower limit control curve when a room temperature falls, wherein the cold sense lower limit control curve is based on a least temperature difference that a user can feel cold for temperature change.

2. The method of claim 1, further comprising:
setting an expected temperature by a user and computing the warmth sense upper limit control curve and the cold sense lower limit control curve by a microcomputer (31).

3. The method of claim 2, wherein the warmth sense upper limit control curve and the cold sense lower limit control curve ascend or descend on the basis of the expected temperature.

4. The method of claim 3, wherein the compressor (33) controls an operational frequency to maintain the warmth sense upper limit control curve or the cold sense lower limit control curve uniformly after a certain time has passed.

5. The method of claim 2, wherein the setting step includes the substeps of:
setting a temperature computed by subtracting a certain temperature from the expected temperature as an OFF time point of the compressor (33) and operating the compressor (33) until it reaches the OFF time point;
setting a temperature computed by adding a certain temperature to the expected temperature as an ON time point of the compressor (33) and stopping the compressor (33) until it reaches the ON time point: and
setting a temperature computed by subtracting a certain temperature from the ON time point as an OFF time point when the compressor (33) reaches the ON time point and operating the compressor (33) until it reaches the OFF time point.

6. The method of claim 5, wherein an operational frequency of the compressor (33) is controlled with a previous OFF time point and a previous ON time point of the compressor (33) by fixing an OFF time point of the compressor (33) uniformly after a certain time has passed.

7. The method of claim 2, wherein the setting step includes the sub-steps of:
setting a temperature computed by adding a certain temperature to the expected temperature as an OFF time point of the compressor (33) and operating the compressor (33) until it reaches the OFF time point;
setting the expected temperature as an ON time point of the compressor (33) when the compressor (33) reaches the OFF time point and stopping the compressor (33) until it reaches the ON time point;
setting a temperature computed by adding a certain temperature to the expected temperature as an OFF time point of the compressor (33) when the compressor (33) reaches the ON time point and operating the compressor (33) until it reaches the OFF time point;
setting a temperature computed by subtracting a certain temperature from the expected temperature as an ON time point of the compressor (33) when the compressor (33) reaches the OFF time point and stopping the compressor (33) until it reaches the ON time point;
setting the expected temperature as an OFF time point when the compressor (33) reaches the ON time point and operating the compressor (33) until it reaches the OFF time point;
setting a temperature computed by subtracting a certain temperature from the expected temperature as an ON time point of the compressor (33) when the compressor (33) reaches the OFF time point and stopping the compressor (33) until it reaches the ON time point; and
setting the expected temperature as an OFF time point when the compressor (33) reaches the ON time point and operating the compressor until it reaches the OFF time point.

8. The method of claim 7, wherein an operational frequency of the compressor (33) is controlled with a previous OFF time point and a previous ON time point of the compressor (33) by fixing an OFF time point of the compressor (33) uniformly after a certain time has passed.

9. The method of claim 2, wherein an ON time point and an OFF time point of the compressor (33) on an ascending curve or a descending curve are controlled on the basis of the expected temperature in an early operation, and an ON time point and an OFF time point of the compressor (33) are controlled on the basis of a constant temperature after a certain time has passed.

10. The method of claim 1, wherein the compressor (33) is operated between the warmth sense upper limit control curve and the cold sense lower limit control curve.

11. The method of claim 1, wherein the compressor (33) is turned on according to the warmth sense upper limit control curve and turned off according to the cold sense lower limit control curve in cooling operation.

12. The method of claim 11, wherein an OFF time point of the compressor (33) is computed by the microcomputer (31) on the basis of an ON time point of the compressor (33).

13. The method of claim 1, wherein the compressor (33) is turned off according to the warmth sense upper limit control curve and turned on according to the cold sense lower limit control curve in heating operation.

14. The method of claim 1, wherein the compressor (33) controls an ON time point or an OFF time point of the compressor (33) by using data of the warmth sense upper limit control curve or the cold sense lower limit control curve stored in a memory (32).

15. The method of claim 1, wherein the warmth sense upper limit control curve is computed by a microcomputer (31) on the basis of a warmth sense of a human body.

16. The method of claim 1, wherein the cold sense lower limit control curve is computed by a microcomputer (31) on the basis of a cold sense of a human body.

17. An operation control apparatus for an air conditioner operating for adjusting a room temperature by repeating a rise and fall of the room temperature within a predetermined range, comprising:
an input unit (30) for setting an expected temperature by a user; and
a microcomputer (31) for computing a warmth sense upper limit control curve or a cold sense lower limit control curve on the basis of the set expected temperature and controlling a room temperature between an ON time point and an OFF time point of a compressor (33) on the warmth sense upper limit control curve or the cold sense lower limit control curve, wherein the warmth sense upper limit control curve is based on a least temperature difference that a user can feel warm for temperature change and the cold sense lower limit control curve is based on a least temperature difference that a user can feel cold for temperature change.

18. The apparatus of claim 17, further comprising:
a memory (32) for storing ON time point data and OFF time point data of the compressor (33).

19. The apparatus of claim 17, wherein the compressor (33) is a constant-speed compressor (33) having only ON and OFF operations of an operational frequency or an inverter type compressor (33) performing variable operation of an operational frequency.

20. The apparatus of claim 17, wherein the microcomputer (31) controls an ON time point and an OFF time point of the compressor (33) on the basis of the expected temperature in early operation of the compressor (33) and controls an ON time point and an OFF time point of the compressor (33) on the basis of a constant room temperature after a certain time has passed.

21. The method of claim 2, wherein the set temperature by a user is not between a warmth sense upper limit control curve and a cold sense lower limit control curve after a certain time.

22. The method of claim 2, wherein as time has passed, cooling operation of the air conditioner is controlled by ascending an upper limit of a room temperature on the basis of the expected temperature and computing a lower limit of a room temperature on the basis of the upper limit of a room temperature.

23. The method of claim 2, wherein as time has passed, heating operation of the air conditioner is controlled by descending a lower limit of a room temperature on the basis of the expected temperature and computing an upper limit of a room temperature on the basis of the expected temperature.

## Patentansprüche

1. Verfahren zum Steuern eines Betriebs einer Klimaanlage, welche eine Raumtemperatur durch wiederholtes Anheben und Absenken einer Raumtemperatur in einem bestimmten Temperaturbereich einstellt, wobei das Verfahren zum Steuern des Betriebs einer Klimaanlage die Schritte umfasst:
Steuern eines Kompressors (33), um eine Raumtemperatur auf ein Niveau einzustellen, das nicht höher liegt als eine obere Grenzwert-Wärmeempfindungs-Steuerkurve, wenn eine Raumtemperatur ansteigt, wobei die obere Grenzwert-Wärmeempfindungs-Steuerkurve auf einer kleinsten Temperaturdifferenz basiert, die ein Nutzer als Temperaturdifferenz bei einer Erwärmung empfinden kann; und
Steuern des Kompressors (33), um eine Raumtemperatur auf ein Niveau einzustellen, das nicht niedriger liegt als eine untere Grenzwert-Kälteempfindungs-Steuerkurve, wenn eine Raumtemperatur absinkt, wobei die untere Grenzwert-Kälteempfindungs-Steuerkurve auf einer kleinsten Temperaturdifferenz basiert, die ein Nutzer hinsichtlich einer Temperaturdifferenz bei einer Abkühlung empfinden kann.

2. Verfahren nach Anspruch 1, ferner umfassend:
Festlegen einer erwarteten Temperatur durch einen Nutzer und Berechnen der oberen Grenzwert-Wärmeempfindungs-Steuerkurve und der unteren Grenzwert-Kälteempfindungs-Steuerkurve durch einen Mikrocomputer (31).

3. Verfahren nach Anspruch 2, wobei die obere Grenzwert-Wärmeempfindungs-Steuerkurve und die untere Grenzwert-Kälteempfindungs-Steuerkurve auf Grundlage der erwarteten Temperatur ansteigen oder abfallen.

4. Verfahren nach Anspruch 3, wobei der Kompressor (33) eine Betriebsfrequenz steuert, um die obere Grenzwert-Wärmeempfindungs-Steuerkurve oder die untere Grenzwert-Kälteempfindungs-Steuerkurve gleichmäßig zu halten, nachdem eine bestimmte Zeit vergangen ist.

5. Verfahren nach Anspruch 2, wobei der Festlegungsschritt die Unterschritte umfasst:
Festlegen einer Temperatur, die durch Subtrahieren einer bestimmten Temperatur von der erwarteten Temperatur erhalten wird, als einen Ausschaltzeitpunkt des Kompressors (33) und Betreiben des Kompressors (33), bis er den Ausschaltzeitpunkt erreicht;
Festlegen einer Temperatur, die durch Addieren einer bestimmten Temperatur zu der erwarteten Temperatur erhalten wird, als einen Anschaltzeitpunkt des Kompressors (33) und Ausschalten des Kompressors (33), bis er den Anschaltzeitpunkt erreicht; und
Festlegen einer Temperatur, die durch Subtrahieren einer bestimmten Temperatur von dem Anschaltzeitpunkt erhalten wird, als einen Ausschaltzeitpunkt, wenn der Kompressor (33) den Anschaltzeitpunkt erreicht und Betreiben des Kompressors (33), bis er den Ausschaltzeitpunkt erreicht.

6. Verfahren nach Anspruch 5, wobei eine Betriebsfrequenz des Kompressors (33) mit einem vorangehenden Ausschaltzeitpunkt und einem vorangehenden Anschaltzeitpunkt des Kompressors (33) gesteuert wird, indem ein Ausschaltzeitpunkt des Kompressors (33) gleichmäßig festgelegt wird, nachdem eine bestimmte Zeit vergangen ist.

7. Verfahren nach Anspruch 2, wobei der Festlegeschritt die Unterschritte umfasst:
Festlegen einer Temperatur, die durch Addieren einer bestimmten Temperatur zu der erwarteten Temperatur erhalten wird, als ein Ausschaltzeitpunkt des Kompressors (33) und Betreiben des Kompressors (33), bis er den Ausschaltzeitpunkt erreicht;
Festlegen der erwarteten Temperatur als einen Anschaltzeitpunkt des Kompressors (33), wenn der Kompressor (33) den Ausschaltzeitpunkt erreicht und Anhalten des Kompressors (33), bis er den Anschaltzeitpunkt erreicht;
Festlegen einer Temperatur, die durch Addieren einer bestimmten Temperatur zu der erwarteten Temperatur erhalten wird, als einen Ausschaltzeitpunkt des Kompressors (33), wenn der Kompressor (33) den Anschaltzeitpunkt erreicht und Betreiben des Kompressors (33), bis er den Ausschaltzeitpunkt erreicht;
Festlegen einer Temperatur, die durch Subtrahieren einer bestimmten Temperatur von der erwarteten Temperatur erhalten wird, als einen Anschaltzeitpunkt des Kompressors (33), wenn der Kompressor (33) den Ausschaltzeitpunkt erreicht, und Anhalten des Kompressors (33), bis er den Anschaltzeitpunkt erreicht;
Festlegen der erwarteten Temperatur als einen Ausschaltzeitpunkt, wenn der Kompressor (33) den Anschaltzeitpunkt erreicht und Betreiben des Kompressors (33), bis er den Ausschaltzeitpunkt erreicht;
Festlegen einer Temperatur, die durch Subtrahieren einer bestimmten Temperatur von der erwarteten Temperatur berechnet wird, als einen Anschaltzeitpunkt des Kompressors (33), wenn der Kompressor (33) den Ausschaltzeitpunkt erreicht und Anhalten des Kompressors (33), bis er den Anschaltzeitpunkt erreicht; und
Festlegen der erwarteten Temperatur als einen Ausschaltzeitpunkt, wenn der Kompressor (33) den Anschaltzeitpunkt erreicht, und Betreiben des Kompressors (33), bis er den Ausschaltzeitpunkt erreicht.

8. Verfahren nach Anspruch 7, wobei eine Betriebsfrequenz des Kompressors (33) mit einem vorangehenden Ausschaltzeitpunkt und mit einem vorangehenden Anschaltzeitpunkt des Kompressors (33) gesteuert wird, indem ein Anschaltzeitpunkt des Kompressors (33) gleichmäßig festgelegt wird, nachdem eine bestimmte Zeit verstrichen ist.

9. Verfahren nach Anspruch 2, wobei ein Anschaltzeitpunkt und ein Ausschaltzeitpunkt des Kompressors (33) auf einer ansteigenden Kurve oder einer abfallenden Kurve auf Grundlage der erwarteten Temperatur in einem frühen Betrieb gesteuert werden und wobei ein Anschaltzeitpunkt und ein Ausschaltzeitpunkt des Kompressors (33) auf Grundlage einer konstanten Temperatur gesteuert werden, nachdem eine bestimmte Zeit verstrichen ist.

10. Verfahren nach Anspruch 1, wobei der Kompressor (33) zwischen der oberen Grenzwert-Wärmeempfindungs-Steuerkurve und der unter Grenzwert-Kälteempfindungs-Steuerkurve betrieben wird.

11. Verfahren nach Anspruch 1, wobei der Kompressor (33) im Kühlbetrieb nach Maßgabe der oberen Grenzwert-Wärmeempfindungs-Steuerkurve angeschaltet wird und nach Maßgabe der unteren Grenzwert-Kälteempfindungs-Steuerkurve ausgeschaltet wird.

12. Verfahren nach Anspruch 11, wobei ein Ausschaltzeitpunkt des Kompressors (33) durch den Mikrocomputer (31) auf Grundlage eines Anschaltzeitpunkts des Kompressors (33) berechnet wird.

13. Verfahren nach Anspruch 1, wobei der Kompressor (33) im Heizbetrieb nach Maßgabe der oberen Grenzwert-Wärmeempfindungs-Steuerkurve ausgeschaltet wird und nach Maßgabe der unteren Grenzwert-Kälteempfindungs-Steuerkurve angeschaltet wird.

14. Verfahren nach Anspruch 1, wobei der Kompressor (33) einen Anschaltzeitpunkt oder einen Ausschaltzeitpunkt des Kompressors (33) steuert, indem Daten der oberen Grenzwert-Wärmeempfindungs-Steuerkurve oder der unteren Grenzwert-Kälteempfindungs-Steuerkurve, die in einem Speicher (32) gespeichert sind, genutzt werden.

15. Verfahren nach Anspruch 1, wobei die obere Grenzwert-Wärmeempfindungs-Steuerkurve durch einen Mikrocomputer (31) auf Grundlage einer Wärmeempfindung eines menschlichen Körpers berechnet wird.

16. Verfahren nach Anspruch 1, wobei die untere Grenzwert-Kälteempfindungs-Steuerkurve von einem Mikrocomputer (31) auf Grundlage einer Kälteempfindung eines menschlichen Körpers berechnet wird.

17. Betriebssteuervorrichtung für eine Klimaanlage, die dazu betrieben wird, um eine Raumtemperatur durch wiederholtes Anheben und Absenken der Raumtemperatur in einem vorbestimmten Temperaturbereich einzustellen, wobei die Betriebssteuervorrichtung umfasst:
eine Eingabeeinheit (30) zum Festlegen einer erwarteten Temperatur eines Nutzers; und
einen Mikrocomputer (31) zum Berechnen einer oberen Grenzwert-Wärmeempfindungs-Steuerkurve oder einer unteren Grenzwert-Kälteempfindungs-Steuerkurve auf Grundlage der festgelegten erwarteten Temperatur und Steuern einer Raumtemperatur zwischen einem Anschaltzeitpunkt und einem Ausschaltzeitpunkt eines Kompressors (33) auf der oberen Grenzwert-Wärmeempfindungs-Steuerkurve oder der unteren Grenzwert-Kälteempfindungs-Steuerkurve, wobei die obere Grenzwert-Wärmeempfindungs-Steuerkurve auf einer kleinsten Temperaturdifferenz beruht, die ein Nutzer hinsichtlich einer Temperaturänderung bei einer Erwärmung empfinden kann, und die untere Grenzwert-Kälteempfindungs-Steuerkurve auf einer kleinsten Temperaturdifferenz basiert, die ein Nutzer hinsichtlich einer Temperaturänderung bei einer Abkühlung empfinden kann.

18. Vorrichtung nach Anspruch 17, ferner umfassend:
einen Speicher (32) zum Speichern von Anschaltzeitpunktdaten und Ausschaltzeitpunktdaten des Kompressors (33).

19. Vorrichtung nach Anspruch 17, wobei der Kompressor (33) ein Konstant-Drehzahl-Kompressor (33) ist mit lediglich An- und Ausschaltbetrieb einer Betriebsfrequenz oder ein Kompressor (33) vom Invertertyp ist, der einen variablen Betrieb einer Betriebsfrequenz zeigt.

20. Vorrichtung nach Anspruch 17, wobei der Mirkocomputer (31) einen Anschaltzeitpunkt und einen Ausschaltzeitpunkt des Kompressors (33) auf der Grundlage der erwarteten Temperatur in einem frühen Betrieb des Kompressors (33) steuert und einen Anschaltzeitpunkt und einen Ausschaltzeitpunkt des Kompressors (33) auf Grundlage einer konstanten Raumtemperatur steuert, nachdem eine bestimmte Zeit verstrichen ist.

21. Verfahren nach Anspruch 2, wobei die von einem Nutzer festgelegte Temperatur nicht zwischen einer oberen Grenzwert-Wärmeempfindungs-Steuerkurve und einer unteren Grenzwert-Kälteempfindungs-Steuerkurve nach einer bestimmten Zeit liegt.

22. Verfahren nach Anspruch 2, wobei dann, wenn eine Zeit verstrichen ist, der Kühlbetrieb der Klimaanlage durch Anheben eines oberen Grenzwerts einer Raumtemperatur auf Grundlage der erwarteten Raumtemperatur gesteuert wird und wobei ein unterer Grenzwert einer Raumtemperatur auf Grundlage des oberen Grenzwerts einer Raumtemperatur berechnet wird.

23. Verfahren nach Anspruch 2, wobei dann, wenn eine Zeit verstrichen ist, der Heizbetrieb der Klimaanlage durch Absenken eines unteren Grenzwerts einer Raumtemperatur auf der Grundlage der erwarteten Temperatur gesteuert wird und wobei ein oberer Grenzwert einer Raumtemperatur auf der Grundlage der erwarteten Temperatur berechnet wird.

## Revendications

1. Procédé de commande de fonctionnement d'un appareil de climatisation pour régler une température d'une pièce en faisant alterner un accroissement et une baisse d'une température de la pièce au sein d'une certaine plage de températures, le procédé de commande de fonctionnement d'un appareil de climatisation comprenant les étapes consistant à :
commander un compresseur (33) pour régler une température d'une pièce non supérieure à une courbe de commande de limite supérieure de sensation de chaleur lorsqu'une température de la pièce augmente, la courbe de commande de limite supérieure de sensation de chaleur étant basée sur une différence minimale de température qu'un utilisateur peut ressentir comme chaude lors d'un changement de température ; et
commander le compresseur (33) pour régler une température d'une pièce non inférieure à une courbe de commande de limite inférieure de sensation de froid lorsqu'une température de la pièce baisse, la courbe de commande de limite inférieure de sensation de froid étant basée sur une différence minimale de température qu'un utilisateur peut ressentir comme froide lors d'un changement de température.

2. Procédé selon la revendication 1, comprenant en outre:
le réglage d'une température attendue par un utilisateur et le calcul de la courbe de commande de limite supérieure de sensation de chaleur et de la courbe de commande de limite inférieure de sensation de froid par un micro-ordinateur (31).

3. Procédé selon la revendication 2, dans lequel la courbe de commande de limite supérieure de sensation de chaleur et la courbe de commande de limite inférieure de sensation de froid descendent ou montent sur la base de la température attendue.

4. Procédé selon la revendication 3, dans lequel le compresseur (33) commande une fréquence de service pour maintenir la courbe de commande de limite supérieure de sensation de chaleur ou la courbe de commande de limite inférieure de sensation de froid uniformément après l'écoulement d'un certain temps.

5. Procédé selon la revendication 2, dans lequel l'étape de réglage comprend les étapes secondaires consistant à :
régler une température calculée en soustrayant une certaine température de la température attendue comme un moment d'arrêt du compresseur (33) et faire fonctionner le compresseur (33) jusqu'à ce qu'il atteigne le moment d'arrêt ;
régler une température calculée en ajoutant une certaine température à la température attendue comme un moment de mise en marche du compresseur (33) et arrêter le compresseur (33) jusqu'à ce qu'il atteigne le moment de mise en marche ; et
régler une température calculée en soustrayant une certaine température du moment de mise en marche comme un moment d'arrêt quand le compresseur (33) atteint le moment de mise en marche et faire fonctionner le compresseur (33) jusqu'à ce qu'il atteigne le moment d'arrêt.

6. Procédé selon la revendication 5, dans lequel une fréquence de service du compresseur (33) est commandée par un moment précédent d'arrêt et un moment précédent de mise en marche du compresseur (33) en fixant un moment d'arrêt du compresseur (33) uniformément après l'écoulement d'un certain temps.

7. Procédé selon la revendication 2, dans lequel l'étape de réglage comprend les étapes secondaires consistant à :
régler une température calculée en ajoutant une certaine température à la température attendue comme un moment d'arrêt du compresseur (33) et faire fonctionner le compresseur (33) jusqu'à ce qu'il atteigne le moment d'arrêt ;
régler la température attendue comme un moment de mise en marche du compresseur (33) lorsque le compresseur (33) atteint le moment d'arrêt et arrêter le compresseur (33) jusqu'à ce qu'il atteigne le moment de mise en marche ;
régler une température calculée en ajoutant une certaine température à la température attendue comme un moment d'arrêt du compresseur (33) lorsque le compresseur (33) atteint le moment de mise en marche et faire fonctionner le compresseur (33) jusqu'à ce qu'il atteigne le moment d'arrêt ;
régler une température calculée en soustrayant une certaine température de la température attendue comme un moment de mise en marche du compresseur (33) quand le compresseur (33) atteint le moment d'arrêt et arrêter le compresseur (33) jusqu'à ce qu'il atteigne le moment de mise en marche ;
régler la température attendue comme un moment d'arrêt lorsque le compresseur (33) atteint le moment de mise en marche et faire fonctionner le compresseur (33) jusqu'à ce qu'il atteigne le moment d'arrêt ;
régler une température calculée en soustrayant une certaine température de la température attendue comme un moment de mise en marche du compresseur (33) quand le compresseur (33) atteint le moment d'arrêt et arrêter le compresseur (33) jusqu'à ce qu'il atteigne le moment de mise en marche ; et
régler la température attendue comme un moment d'arrêt lorsque le compresseur (33) atteint le moment de mise en marche et faire fonctionner le compresseur jusqu'à ce qu'il atteigne le moment d'arrêt.

8. Procédé selon la revendication 7, dans lequel une fréquence de service du compresseur (33) est commandée par un moment précédent d'arrêt et un moment précédent de mise en marche du compresseur (33) en fixant un moment d'arrêt du compresseur (33) uniformément après l'écoulement d'un certain temps.

9. Procédé selon la revendication 2, dans lequel un moment de mise en marche et un moment d'arrêt du compresseur (33) sur une courbe ascendante ou sur une courbe descendante sont commandés sur la base de la température attendue lors un fonctionnement précoce, et un moment de mise en marche et un moment d'arrêt du compresseur (33) sont commandés sur la base d'une température constante après l'écoulement d'un certain temps.

10. Procédé selon la revendication 1, dans lequel le compresseur (33) est commandé entre la courbe de commande de limite supérieure de sensation de chaleur et la courbe de commande de limite inférieure de sensation de froid.

11. Procédé selon la revendication 1, dans lequel le compresseur (33) est mis en marche en fonction de la courbe de commande de limite supérieure de sensation de chaleur et est arrêté en fonction de la courbe de commande de limite inférieure de sensation de froid lors d'une opération de refroidissement.

12. Procédé selon la revendication 11, dans lequel un moment de mise en marche du compresseur (33) est calculé par le micro-ordinateur (31) sur la base d'un moment de mise en marche du compresseur (33).

13. Procédé selon la revendication 1, dans lequel le compresseur (33) est arrêté en fonction de la courbe de commande de limite supérieure de sensation de chaleur et est mise en marche en fonction de la courbe de commande de limite inférieure de sensation de froid lors d'une opération de chauffage.

14. Procédé selon la revendication 1, dans lequel le compresseur (33) commande un moment de mise en marche et un moment d'arrêt du compresseur (33) en utilisant des données de la courbe de commande de limite supérieure de sensation de chaleur ou de la courbe de commande de limite inférieure de sensation de froid enregistrées dans une mémoire (32).

15. Procédé selon la revendication 1, dans lequel la courbe de commande de limite supérieure de sensation de chaleur est calculée par un micro-ordinateur (31) sur la base d'une sensation de chaleur d'un corps humain.

16. Procédé selon la revendication 1, dans lequel la courbe de commande de limite inférieure de sensation de froid est calculée par un micro-ordinateur (31) sur la base d'une sensation de froid d'un corps humain.

17. Dispositif de commande de fonctionnement d'un appareil de climatisation fonctionnant de manière à régler une température d'une pièce en faisant alterner un accroissement et une baisse d'une température de la pièce au sein d'une plage prédéterminée, le dispositif de commande de fonctionnement comprenant :
une unité d'entrée (30) pour le réglage d'une température attendue par un utilisateur ; et
un micro-ordinateur (31) pour le calcul d'une courbe de commande de limite supérieure de sensation de chaleur ou d'une courbe de commande de limite inférieure de sensation de froid sur la base de la température attendue réglée et la commande d'une température d'une pièce entre un moment de mise en marche et un moment d'arrêt d'un compresseur (33) sur la courbe de commande de limite supérieure de sensation de chaleur ou sur la courbe de commande de limite inférieure de sensation de froid, la courbe de commande de limite supérieure de sensation de chaleur étant basée sur une différence minimale de température qu'un utilisateur peut ressentir comme chaude lors d'un changement de température et la courbe de commande de limite inférieure de sensation de froid étant basée sur une différence minimale de température qu'un utilisateur peut ressentir comme froide lors d'un changement de température.

18. Dispositif selon la revendication 17, comprenant en outre:
une mémoire (32) pour enregistrer des données de moment de mise en marche et des données de moment d'arrêt du compresseur (33).

19. Dispositif selon la revendication 17, dans lequel le compresseur (33) est un compresseur (33) à vitesse constante ayant uniquement des fonctions de mise en marche et d'arrêt d'une fréquence de service ou un compresseur du type à inverseur (33) exécutant une fonction variable d'une fréquence de service.

20. Dispositif selon la revendication 17, dans lequel le micro-ordinateur (31) commande un moment de mise en marche et un moment d'arrêt du compresseur (33) sur la base de la température attendue lors d'un fonctionnement précoce du compresseur (33) et commande un moment de mise en marche et un moment d'arrêt du compresseur (33) sur la base d'une température constante de la pièce après l'écoulement d'un certain temps.

21. Procédé selon la revendication 2, dans lequel la température réglée par un utilisateur n'est pas entre une courbe de commande de limite supérieure de sensation de chaleur et une courbe de commande de limite inférieure de sensation de froid après un certain temps.

22. Procédé selon la revendication 2, dans lequel lorsqu'un temps s'est écoulé, l'opération de refroidissement de l'appareil de climatisation est commandée en augmentant une limite supérieure d'une température d'une pièce sur la base de la température attendue et en calculant une limite inférieure d'une température d'une pièce sur la base de la limite supérieure d'une température d'une pièce.

23. Procédé selon la revendication 2, dans lequel lorsqu'un temps s'est écoulé, l'opération de chauffage de l'appareil de climatisation est commandée en diminuant une limite inférieure d'une température d'une pièce sur la base de la température attendue et en calculant une limite supérieure d'une température d'une pièce sur la base de la température attendue.
